# EUROPÄISCHE PATENTANMELDUNG

(11) **EP 2 518 889 A1**
(43) Veröffentlichungstag der Anmeldung: **31.10.2012**
(21) Anmeldenummer: 11164316.9
(22) Anmeldetag: 29.04.2011
(51) Int. Cl.: H02M 7/5387, H05B 6/06

(54) **Schwingkreiswechselrichter mit regelbarem Arbeitspunkt**

(71) Anmelder: AEG Power Solutions B.V., 1161 AH Zwanenburg (NL)
(72) Erfinder: Bajan, Liviu, Dr., 72581 Dettingen (DE); El Gharib, Samir, 59581 Warstein (DE)
(74) Vertreter: Graefe, Jörg

(57) **Zusammenfassung**

Die Erfindung betrifft einen Schwingkreiswechselrichter (20)
- mit einem Gleichrichter,
- einem Gleichstromzwischenkreis (202) und
- einem Wechselrichter (203), der steuerbare Schalter umfasst und dessen Ausgang den Ausgang des Schwingkreiswechselrichters bildet und über den der Strom einer anschließbaren Last geführt wird,
- wobei der Schwingkreiswechselrichter (20) ein erstes Regelmittel aufweist (10), mit welchem der durch einen Phasenwinkel zwischen einem Ausgangsstrom (Iᵢₛₜ) und einer Spannung (Uᵢₛₜ) am Ausgang des Schwingkreiswechselrichters (20) festgelegte Arbeitspunkt (A_{P}) des Schwingkreiswechselrichters (20) regelbar ist, wozu das erste Regelmittel (10) als Stellgröße eine mittels des Wechselrichters (203) einzustellende Frequenz des Ausgangsstroms (Iᵢₛₜ) ermittelt,
- wobei der Schwingkreiswechselrichter (20) einen Phasendetektor (8) aufweist, mittels dem in Abhängigkeit von einem Nulldurchgang des Ausgangsstroms (Iᵢₛₜ) ein Ist-Phasenwinkel ermittelbar ist, und
- wobei der Schwingkreiswechselrichter ein Mittel zur Detektierung eines Nulldurchgangs des Ausgangsstroms (Iᵢₛₜ) aufweist,

wobei zur Ermittlung des Ist-Phasenwinkels die Differenz (Tᵢ-Tₜ)
- einer gemessenen Zeit (Tᵢ) zwischen einem Zeitpunkt eines Anlegens eines Einschaltimpulses an eine Steuerelektrode eines den Ausgangsstrom (Iᵢₛₜ) übernehmenden steuerbaren Schalters des Wechselrichters und dem Zeitpunkt des darauf folgenden Nulldurchgangs des Ausgangsstroms (Iᵢₛₜ) messbar und
- eine bekannte Totzeit (Tₜ) zwischen dem Zeitpunkt eines Anlegens eines Einschaltimpulses an einen Anschluss des Wechselrichters (203) zum Übernehmen des Ausgangsstroms durch einen steuerbaren Schalter des Wechselrichters (203) und einer darauf folgenden Umkehr der Spannung am Ausgang des Wechselrichters (203) ermittelbar ist.

## Beschreibung

Die vorliegende Erfindung betrifft einen Schwingkreiswechselrichter mit einem regelbaren Arbeitspunkt.

Schwingkreiswechselrichter sind beispielsweise in dem Lehrbuch "Leistungselektronik" von Rainer Felderhoff erschienen im Carl Hanser Verlag, 2. Auflage, ISBN 3-446-18993-9 beschrieben. Die dort beschriebenen Schwingkreiswechselrichter weisen beispielsweise einen Dreiphasengleichrichter, einen Gleichstromzwischenkreis und einen einphasigen Wechselrichter auf, dessen Ausgang den Ausgang des Schwingkreiswechselrichters bildet und über den der Strom der angeschlossenen Last fließt.

Schwingkreiswechselrichter werden häufig als Frequenzumrichter eingesetzt.

Aus dem Dokument EP 0 617 503 A1 ist ein Verfahren und eine Vorrichtung zur Arbeitspunktregelung eines
Schwingkreiswechselrichters bekannt. Der in diesem Dokument offenbarte Schwingkreisgleichrichter wird zur induktiven Erwärmung eines Heizgutes verwendet. In dem Dokument ist die Bedeutung der für die induktive Erwärmung gewählten Frequenz des Stroms im Lastkreis erläutert. Die Frequenz des Ausgangsstroms ist vorteilhaft entweder wenig größer als die Resonanzfrequenz oder wenig kleiner als die Resonanzfrequenz, je nach Wahl und/oder Verfügbarkeit der elektrotechnischen Komponenten. Es ergibt sich daher, was in dem Dokument ebenfalls erläutert ist, ein induktives Verhalten oder ein kapazitives Verhalten des Lastkreises, das heißt, dass der Ausgangsstrom der Spannung am Ausgang des Schwingkreiswechselrichters entweder nacheilt oder voreilt. Der Arbeitspunkt, in welchem der in dem Dokument offenbarte Schwingkreiswechselrichter betrieben werden soll, wird durch den Phasenwinkel zwischen dem Ausgangsstrom und der Spannung am Ausgang des Schwingkreiswechselrichters festgelegt.

Im Fall der beschriebenen induktiven Erwärmung ergibt sich durch die Erwärmung eine Parameteränderung im Lastkreis, die zu einer Änderung der Resonanzfrequenz führt. Ebenso ändert sich der Phasenwinkel zwischen dem Ausgangsstrom und der Spannung am Ausgang des Schwingkreiswechselrichters, d. h. der Arbeitpunkt ändert sich, was nicht erwünscht ist.

Der in dem genannten Dokument beschriebenen Lösung lag die Aufgabe zugrunde, ein Verfahren und eine Vorrichtung zur Arbeitspunktregelung eines Serienschwingkreiswechselrichters vorzuschlagen, so dass unabhängig von Parameterschwankungen der Schwingkreiselemente der vorgeschriebene Arbeitsbereich für den
Schwingkreiswechselrichter erkannt und stabil gehalten werden kann.

Das genannte Dokument offenbart eine Regelung des Phasenwinkels, wobei der Regler die Differenz zwischen einem Soll-Phasenwinkel und einem Ist-Phasenwinkel auswertet und in Abhängigkeit der Auswertung die Frequenz des Ausgangsstroms durch Einwirkung auf den Wechselrichter einstellt. Der Phasenwinkel kann zum Beispiel der Winkel zwischen dem Ausgangsstrom und der Spannung am Ausgang des Wechselrichters sein.

In dem Dokument ist allerdings auch die Verwendung des Phasenwinkels zwischen anderen Größen beschrieben, da insbesondere die Verwendung des Ausgangsstroms mitunter nachteilig sein kann.

Mittels eines Schwingkreiswechselrichters ist es nicht nur möglich Heizgüter induktiv zu Erwärmen. Es ist ebenso möglich, Heizgüter unter Ausnutzung ihres Wirkwiderstandes durch Stromdurchleitung zu erwärmen, was zum Beispiel bei der Erwärmung von Siliciumstäben oder Siliciumdünnstäben bei der Herstellung von Polysilicium mittels chemischer Dampfabscheidung (Chemical Vapor Deposition) nach dem Siemensverfahren erfolgt.

Bei der Erhitzung von Siliciumstäben oder Siliciumdünnstäben (auch Siliciumsaatstäbe genannt) kommt es durch das Wachsen der Siliciumstäbe bzw. -dünnstäbe wie schon bei der induktiven Erhitzung von Heizgütern zu einer Parameteränderung im Schwingkreis. Auch bei der chemischen Dampfabscheidung ändert sich dadurch die Resonanzfrequenz des Schwingkreises und der Arbeitspunkt muss entsprechend dieser Änderung nachgeführt werden. Der Arbeitspunkt kann bei der Dampfabscheidung ebenso wie bei der induktiven Erhitzung durch die Regelung des Phasenwinkels zwischen dem Ausgangsstrom und der Spannung am Ausgang des Schwingkreiswechselrichters erfolgen.

Bei einem Schwingkreiswechselrichter kann es insbesondere bei der Verwendung eines einphasigen Wechselrichters in H-Schaltung bei Frequenzen in der Nähe der Resonanzfrequenz zu
Doppelkommutierungen kommen, weshalb es kurz hintereinander zu Richtungsänderungen des Ausgangsstroms kommt. Diese mehrfachen Richtungsänderungen haben mehrere Nulldurchgänge des Ausgangsstroms zur Folge, weshalb eine Nulldurchgangsdetektierung zur Detektierung des Phasenwinkels zwischen dem Ausgangsstrom und der Spannung am Ausgang des Schwingkreiswechselrichters zumindest schwierig ist.

Hier setzt die Erfindung an.

Der Erfindung liegt die Aufgabe zu Grunde einen

Schwingkreiswechselrichter vorzuschlagen, mit dem eine Regelung des Phasenwinkels, d.h. des Arbeitspunktes möglich ist, ohne dass eine Detektierung des Nulldurchgangs der Ausgangsspannung nötig ist.

Diese Aufgabe wird erfindungsgemäß dadurch gelöst, dass zur Ermittelung des Ist-Phasenwinkels eine Differenz
- einer gemessenen Zeit zwischen einem Zeitpunkt eines Anlegens eines Einschaltimpulses an eine Steuerelektrode eines den Ausgangsstrom übernehmenden steuerbaren Schalters des Wechselrichters und dem Zeitpunkt des darauf folgenden Nulldurchgangs des Ausgangsstroms messbar und
- eine bekannte Totzeit zwischen dem Zeitpunkt eines Anlegens eines Einschaltimpulses an eine Steuerelektrode eines den Ausgangsstrom übernehmenden steuerbaren Schalters des Wechselrichters und einer darauf folgenden Umkehr der Spannung am Ausgang des Wechselrichters
ermittelbar ist.

Aus dieser Differenz kann bei bekannter Frequenz, ohne dass dieses einen Fachmann vor ein Problem stellt, der Phasenwinkel zwischen den Zeitpunkten des Endes der Totzeit und dem Nulldurchgang des Ausgangsstroms innerhalb einer Periode des Ausgangsstroms bzw. der Ausgangsspannung ermittelt werden.

Ein erfindungsgemäßer Schwingkreiswechselrichter kann ein zweites Regelmittel aufweisen, mit welchem der Ausgangsstrom geregelt werden kann. Sollte der von dem Schwingkreiswechselrichter zur Verfügung gestellte Ausgangsstrom bei eingeregeltem Phasenwinkel nicht ausreichend sein, kann der Ausgangsstrom geregelt werden, damit der Ist-Ausgangsstrom einen gewünschten Soll-Ausgangsstrom erreicht. Die Regelung des Ausgangsstroms ist dabei vorteilhaft langsamer als die Regelung des Phasenwinkels, so dass stets dafür gesorgt ist, dass der Schwingkreiswechselrichter am gewünschten Arbeitspunkt und mit dem sich an dem gewünschten Arbeitspunkt ergebenden Ausgangsstrom betrieben wird.

Dem zweiten Regelmittel kann ein Mittel zur Bildung einer Regeldifferenz aus einem Signal für einen Soll-Ausgangsstrom und einem mittels eines Stromsensors gemessenen Signals für einen Ist-Ausgangsstrom zugeordnet sein. Der Schwingkreiswechselrichter kann ein Mittel zur Bildung des Betrags der Regeldifferenz und zum Vergleich des Betrages der Regeldifferenz mit einem vorgegebenen Wert aufweisen. In Abhängigkeit eines Ergebnisses des Vergleiches kann entweder nur das erste Regelmittel zum Regeln des Phasenwinkels aktivierbar oder deaktivierbar sein oder das erste Regelmittel zum Regeln des Phasenwinkels und das zweite Regelmittel zum Regeln des Ausgangsstroms aktivierbar oder deaktivierbar sein.

Bei einer kleinen Regelabweichung des Ausgangsstroms soll zunächst durch ein Einregeln des Phasenwinkels, d.h. des Arbeitspunktes erreicht werden den gewünschten Strom zu erreichen. Das ist insbesondere dann zielführend, wenn die Regeldifferenz zwischen dem Ist-Phasenwinkel und dem Soll-Phasenwinkel groß ist und die am Wechselrichter eingestellte Frequenz sich stark von der Resonanzfrequenz unterscheidet. In einem derartigen Fall kann man davon ausgehen, dass im Arbeitspunkt mit dem gewünschten Soll-Phasenwinkel ein zum Teil deutlich größerer Strom erreicht wird als mit der eingestellten Frequenz.

Erst wenn dieses nicht ausreicht oder wenn der Betrag der Regelabweichung zu groß ist, wird die Regelung des Ausgangsstroms aktiviert. Es wird dann eine Stellgröße für die Gleichspannung im Gleichspannungszwischenkreis an den Gleichrichter gegeben. Der Gleichrichter kann diese Spannung im Zwischenkreis einstellen (vorzugsweise einregeln). Da der Ausgangsstrom unmittelbar von der Zwischenkreisspannung abhängt, ist durch Veränderung der Zwischenkreisspannung eine Regelung des Ausgangsstroms möglich.

Beim Betreiben eines erfindungsgemäßen

Schwingkreiswechselrichters kann zum Initialisieren des Schwingkreisgleichrichters zunächst die Resonanzfrequenz ermittelt werden. Zur Ermittelung der Resonanzfrequenz kann die Frequenz von einem Ausgangswert ausgehend herabgesetzt werden und dabei der Ausgangsstrom gemessen werden. Es kann dann die Frequenz als Resonanzfrequenz erfasst werden, bei der sich der größte Ausgangsstrom einstellt. Da bei Resonanz kein Blindstrom im Ausgangskreis vorhanden ist, wird der messbare Wirkstrom bei Resonanz am größten. Über die Messung des Ausgangsstroms kann also die Resonanzfrequenz praktisch ermittelt werden.

Nach dem Ermitteln der Resonanzfrequenz kann die Regelung des Phasenwinkels mittels des ersten Regelmittels der Phasenwinkel begonnen werden. Zum Regeln des Phasenwinkels kann die Differenz
- einer gemessenen Zeit zwischen einem Zeitpunkt eines Anlegens eines Einschaltimpulses an eine Steuerelektrode eines den Ausgangstrom übernehmenden steuerbaren Schalters des Wechselrichters und dem Zeitpunkt des darauf folgenden Nulldurchgangs des Ausgangsstroms messbar und
- eine bekannte Totzeit zwischen dem Zeitpunkt eines Anlegens eines Einschaltimpulses an eine Steuerelektrode eines den Ausgangstrom übernehmenden steuerbaren Schalters des Wechselrichters und einer darauf folgenden Umkehr der Spannung am Ausgang des Wechselrichters ermittelt werden.

Aus der Differenz kann dann der Ist-Phasenwinkel ermittelt und eine Regeldifferenz aus einem Soll-Phasenwinkel und dem Ist-Phasenwinkel gebildet werden. Mittels des ersten Regelmittels kann in Abhängigkeit der Regeldifferenz aus dem Soll-Phasenwinkel und dem Ist-Phasenwinkel als Stellgröße für den Wechselrichter die Frequenz so verändert werden, dass sich am Ausgang des Wechselrichters der Soll-Phasenwinkel einstellt.

Nach einem Einregeln des Phasenwinkels kann die Regelung des Ausgangsstroms mittels des zweiten Regelmittels begonnen werden, falls ein Betrag einer Regeldifferenz zwischen dem Soll-Ausgangsstrom und dem Ist-Ausgangsstrom größer als ein vorgegebener Wert ist.

Weitere Merkmale und Vorteile der vorliegenden Erfindung werden anhand der Zeichnungen erläutert. Es zeigt
- Fig. 1: einen Übersichtsschaltplan einer erfindungsgemäßen Schaltungsanordnung mit einem erfindungsgemäßen Schwingkreiswechselrichter und an die Schaltungsanordnung angeschlossener Lasten,
- Fig. 2: Resonanzkurven des Schwingkreiswechselrichters und daran angeschlossener Komponenten,
- Fig. 3: den Verlauf einer Ausgangsspannung des Schwingkreiswechselrichters, eines Ausgangsstroms des Schwingkreiswechselrichters, eines Ausgangsstroms der Schaltungsanordnung und einer an einer Steuerelektrode eines Stromrichterventils des Wechselrichters anliegenden Steuerspannung über etwas mehr als einer Periode,
- Fig. 4: einen Ausschnitt aus Fig. 3 und
- Fig. 5: ein regelungstechnisches Blockschaltbild der erfindungsgemäßen Schaltungsanordnung.

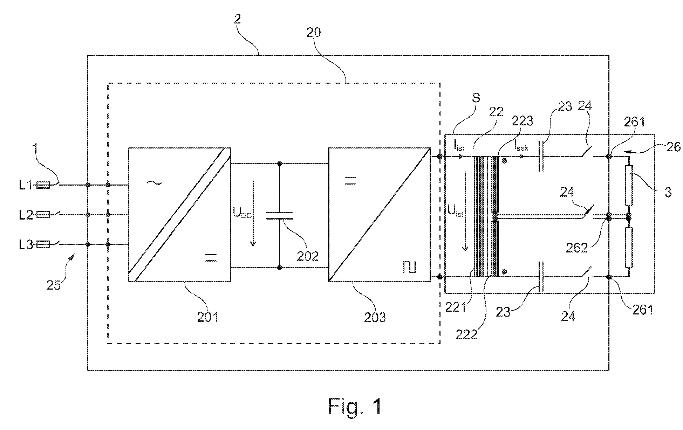

In Figur 1 sind nur leistungselektronische Komponenten der erfindungsgemäßen Schaltungsanordnung dargestellt. Regler, Messwertaufnehmer oder andere für die Regelung oder die Steuerung der leistungselektronischen Komponenten notwendige Komponenten oder Bauelemente sind nicht dargestellt.

Die in der Figur 1 dargestellte erfindungsgemäße

Schaltungsanordnung weist einen dreipoligen Eingang 25 auf, dessen Anschlüsse über Schalter und Sicherungen 1 mit einem dreiphasigen Netz L1 , L2, L3 verbunden ist. Bei dem Netz kann es sich um ein öffentliches Niederspannungsnetz handeln. Die erfindungsgemäße Schaltungsanordnung stellt aus der am Eingang 25 anliegenden Dreiphasenwechselspannung eine an Ausgängen 26 der Schaltungsanordnung 2 anliegende Zweiphasenwechselspannung her.

Die Spannungen der Zweiphasenwechselspannung sind um 180°, d.h. um eine halbe Periode gegeneinander verschoben und somit gegenphasig. Außerdem haben die Spannungen des Zweiphasenwechselspannungssystems einen gleichen Effektivwert.
Die Spannung zwischen den Außenleitern des
Zweiphasenwechselspannungssystems ist daher null.

Die Ausgänge 26 weisen jeweils einen Außenleiteranschluss 261 und einen Mittelpunktleiteranschluss 262 auf. Zwischen dem Außenleiteranschluss 261 und dem Mittelpunktleiteranschluss 262 ist jeweils eine Last 3 angeschlossen. Bei der Last kann es sich beispielsweise um ein oder mehrere Siliciumstabpaare in einem Siemensreaktor handeln.

Die erfindungsgemäße Schaltungsanordnung hat u. a. die Aufgabe aus der Dreiphasenwechselspannung die
Zweiphasenwechselspannung zu erzeugen.

Eine weitere Aufgabe der erfindungsgemäßen Schaltungsanordnung 2 ist es, dass mit der erfindungsgemäßen Schaltungsanordnung 2 die Frequenz der Zweiphasenwechselspannung an den Ausgängen 26 eingestellt werden kann.

Außerdem soll mit der erfindungsgemäßen Schaltungsanordnung 2 der Strom durch die Ausgänge 26 eingestellt werden können.

Zum Einstellen der Frequenz des Stroms und der Stromstärke der durch die Ausgänge 26 der erfindungsgemäßen Schaltungsanordnung 2 fließenden Stroms weist die erfindungsgemäße
Schaltungsanordnung 2 einen Schwingkreiswechselrichter 20 auf.

Der Schwingkreiswechselrichter 20 umfasst eine Sechsplus-Brückenschaltung (B6-Schaltung) als Gleichrichter, der ein Dreiphasenwechselstromtransformator vorgeschaltet ist, der eine galvanische Trennung vom Netz ermöglicht. Die Sechsplus-Brückenschaltung weist steuerbare Stromrichterventile auf, so dass die Gleichspannung am Ausgang der Sechsplus-Brückenschaltung einstellbar ist. Der Transformator und die Sechsplus-Brückenschaltung sind mit einem Symbol in der Figur 1 dargestellt, welches mit dem Bezugszeichen 201 bezeichnet ist.

Im so genannten Gleichstromzwischenkreis ist ein Kondensator 202 parallel zum Ausgang der Sechsplus-Brückenschaltung geschaltet, so wie es aus dem Stand der Technik bekannt ist.

Dem Gleichstromzwischenkreis mit dem Kondensator 202 ist ein Wechselrichter 203 nachgeschaltet. Es handelt sich dabei um einen Einphasenwechselrichter mit einer H-Schaltung von Stromrichterventilen.

Die Frequenz des von dem Wechselrichter 203 zur Verfügung gestellten Stroms hängt von der Schaltfrequenz der Stromrichterventile des Wechselrichters 203 ab. Die Stromstärke Iᵢₛₜ des von dem Wechselrichter zur Verfügung gestellten Stroms ist von der Gleichspannung U_{DC} im Gleichspannungszwischenkreis abhängig, die mittels der Sechsplus-Brückenschaltung einstellbar ist.

Ein solcher Schwingkreiswechselrichter 20 ist aus dem Stand der Technik grundsätzlich bekannt.

Dem Schwingkreiswechselrichter 20 ist ein Transformator 22 nachgeschaltet. Der Transformator 22 weist eine Primärwicklung 221 auf, die an den Ausgang des Wechselrichters 203 bzw. den Ausgang des Schwingkreiswechselrichters 20 angeschlossen ist. Der Transformator 22 weist ferner zwei Sekundärwicklungen 222, 223 auf. Die beiden Sekundärwicklungen 222, 223 sind gegensinnig gewickelt und sind auf einem Schenkel eines Transformatorkerns des Transformators 22 angeordnet. Sie werden daher von dem gleichen Magnetfeld durchsetzt.

Benachbarte Enden der Sekundärwicklungen 222, 223 sind miteinander verbunden und bilden den Mittelpunkt des Zweiphasenspannungssystems, welches am Ausgang der erfindungsgemäßen Schaltungsanordnung 2 bereitgestellt ist. Über Schalter 24 ist der Mittelpunkt mit Anschlüssen 262 der Ausgänge 26 der Schaltungsanordnung 2 verbunden.

Die verbleibenden, entgegengesetzt liegenden Enden der Sekundärwicklungen 222, 123 sind über jeweils einen Kondensator 23 und einen Schalter 24 mit dem Anschluss 261 der Ausgänge 26 verbunden. Diese Anschlüsse bilden die Anschlüsse für die Außenleiter des Zweiphasenspannungssystems, dass von der erfindungsgemäßen Schaltungsanordnung 2 zur Verfügung gestellt wird.

Der Transformator 22, die Kondensatoren 23 und die Lasten 3 bilden einen Schwingkreis S am Ausgang des Schwingkreiswechselrichters 20. Wie jeder Schwingkreis hat dieser Schwingkreis eine Resonanzfrequenz.

Im Schwingkreis S wird eine höchst mögliche Wirkleistung umgesetzt, wenn die Frequenz, die der über den Ausgang des Schwingkreiswechselrichters 20 und somit über den Schwingkreis S fließenden Ausgangsstrom der Resonanzfrequenz entspricht. Die Blindleistung, die im Schwingkreis S steckt, ist dann so klein wie möglich.

Es wäre also wünschenswert, den Wechselrichter 203 des Schwingkreisgleichrichters 20 mit der Resonanzfrequenz des Schwingkreises S zu betreiben.

Es hat sich allerdings gezeigt, dass es aus verschiedenen Gründen ungünstig ist, den Wechselrichter mit der Resonanzfrequenz des Schwingkreises zu betreiben. So kommt es beispielsweise beim Betrieb des Wechselrichters 203 zu Doppelkommutationen, die unerwünscht sind.

Diese können verhindert werden, in dem die Frequenz etwas höher als die Resonanzfrequenz des Schwingkreises S ist. Ist die Frequenz etwas höher als die Resonanzfrequenz, stellt sich ein Phasenwinkel zwischen dem Ausgangsstrom Iᵢₛₜ des Schwingkreiswechselrichters 20 und der Ausgangsspannung Uᵢₛₜ des Schwingkreiswechselrichters 20 ein.

Außerdem heißt das, dass der Arbeitspunkt im induktiven Bereich liegt und so die Dioden nicht so stark belastet werden, und keine hohe Verlustleistung durch die Dioden verursacht werden. Die Doppelkommuntaitonen finden nicht statt.

Erfindungsgemäß ist nun vorgesehen dass der Arbeitspunkt, in dem der Schwingkreiswechselrichter 20 betrieben werden soll, durch einen vorbestimmten Phasenwinkel bestimmt ist. Ist der vorbestimmte Phasenwinkel eingestellt, wird der Schwingkreiswechselrichter 20 in dem gewünschten Arbeitspunkt betrieben.

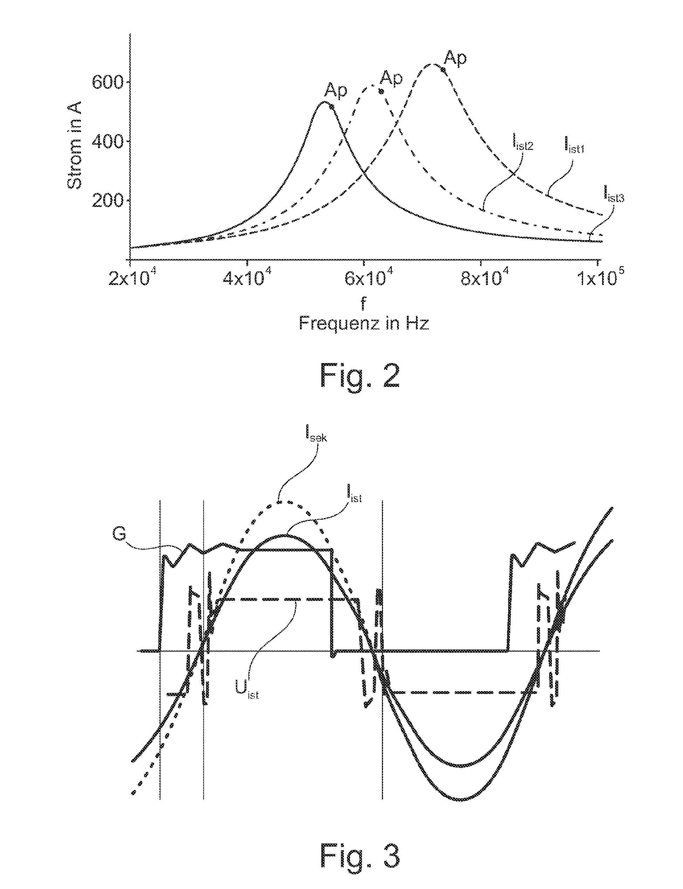

Da wenigstens die Lasten 3 des Schwingkreises S eine veränderliche Impedanz haben - es handelt sich um Siliciumstäbe, deren Widerstand sich ändert - ändern sich bei Betrieb der erfindungsgemäßen Schaltungsanordnung die Parameter des Schwingkreises S. Dadurch ändert sich die Resonanzfrequenz. So kann sich beispielsweise die Resonanzfrequenz erhöhen, wie in Fig. 2 dargestellt ist.

Um stets den gleichen Arbeitspunkt beizuhalten, muss daher die Frequenz, mit welcher der Wechselrichter 203 betrieben wird, bzw. die Frequenz des Ausgangsstroms Iᵢₛₜ nachgeführt werden. Dazu wird bei dem erfindungsgemäßen Schwingkreiswechselrichter 20 auf eine Regelung des Phasenwinkels zwischen einem Strom Iᵢₛₜ und einer Spannung Uᵢₛₜ am Ausgang des Schwingkreiswechselrichters 20 zurückgegriffen. Anstelle des Ausgangsstroms Iᵢₛₜ des Schwingkreiswechselrichters 20 könnte auch ein Laststrom Iₛₑₖ durch eine der Lasten 3 zur Ermittelung des Phasenwinkels verwendet werden, da dieser in Phase zum Ausgangsstroms Iᵢₛₜ des Schwingkreiswechselrichters 20 ist.

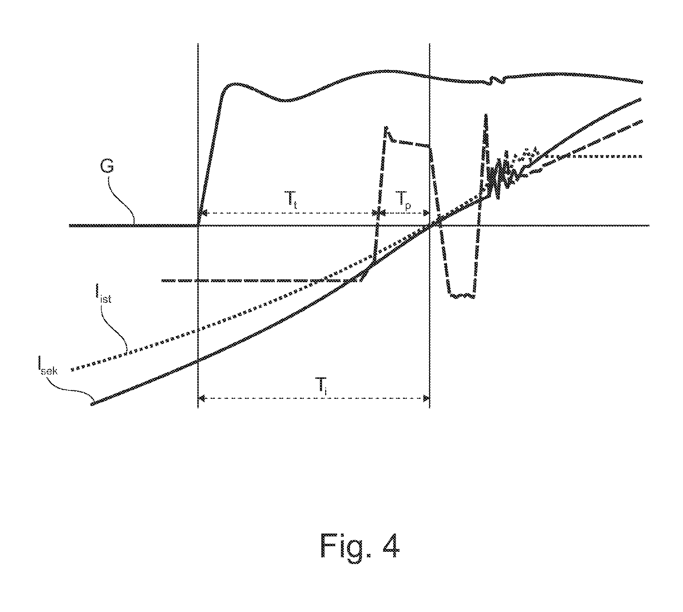

Das Problem ist allerdings die Erfassung des Nulldurchgangs der Ausgangsspannung Uᵢₛₜ bei Frequenzen nahe der Resonanzfrequenz. Aufgrund der Doppelkommutationen in einem Frequenzband um die Resonanzfrequenz, ist keine eindeutige oder zuverlässige Erfassung des Nulldurchgangs der Ausgangsspannung Uᵢₛₜ möglich. Die Doppelkommutationen sind in den Figuren 3 und 4 an dem Verlauf Uᵢₛₜ der Ausgangsspannung des Schwingkreiswechselrichters erkennbar. Die Erfindung macht die sich in den Figuren 3 und 4 wiederspiegelnde Erkenntnis zu nutze, dass der für die Ermittlung des Phasenwinkels relevante Nulldurchgang bzw. der Umkehrpunkt der Ausgangsspannung Uᵢₛₜ in einem festen zeitlichen Bezug zum Zeitpunkt eines Anlegens eines Einschaltimpulses eines Steuersignals G an einen Anschluss des Wechselrichters zum Übernehmen des Ausgangsstroms Iᵢₛₜ durch einen steuerbaren Schalter des Wechselrichters hat. Dieser feste zeitliche Bezug wird durch eine in einem Treiber des Wechselrichters hinterlegte Totzeit Tₜ vorgegeben, der den von außen an den Wechselrichter angelegten Einschaltimpuls erst nach Ablauf der Totzeit Tₜ an die Elektrode des stromübernehmenden Schalters weiterleitet. Diese verzögerte Weiterleitung ist notwendig, damit während des Kommutationsvorgangs keine Kürzschlüsse entstehen.

Die Totzeit Tₜ ist durch den Treiber festgelegt.

Da die Totzeit Tₜ bekannt ist, ist es für die Ermittlung des Ist-Phasenwinkels ausreichend, wenn der Zeitpunkt des Nulldurchgangs des Ausgangsstroms Iᵢₛₜ messtechnisch erfasst wird. Dieser Zeitpunkt kann zum Beispiel bezogen auf den Beginn des Einschaltimpulses des Einschaltsignals G erfasst werden. Ist die zwischen dem Zeitpunkt des Beginns des Einschaltimpulses und dem Nulldurchgang des Ausgangsstroms Iᵢₛₜ erfasste Zeit Tᵢ erfasst, kann durch Differenzbildung zwischen der erfassten Zeit Tᵢ und der Totzeit Tₜ die Zeit Tₚ zwischen den Nulldurchgängen der Ausgangsspannung Uᵢₛₜ und des Ausgangsstroms Iᵢₛₜ ermittelt werden. Bei bekannter Frequenz ist dann eine einfache Ermittlung des Phasenwinkels möglich.

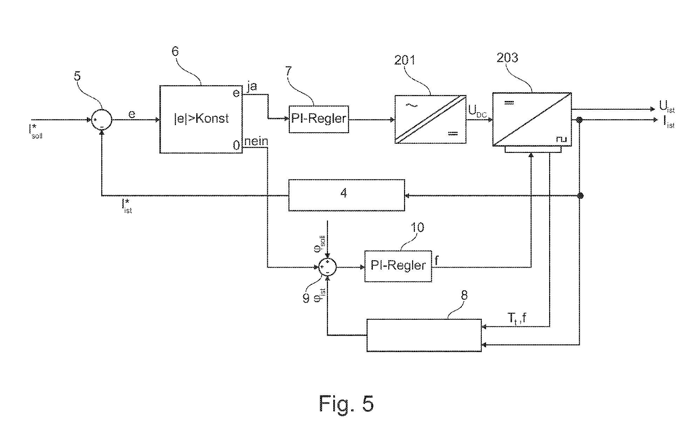

Mittels der Erfindung ist nun eine Regelung des Phasewinkels und somit des Arbeitspunktes der erfindungemäßen Schaltungsanordnung möglich, wie es in Figur 5 dargestellt ist.

Die Regelung der erfindungsgemäßen Schaltungsanordnung erfolgt über zwei Regelkreise, einen Regelkreis zur Regelung des Phasenwinkels (und somit zur Regelung des Arbeitspunktes) und einen Regelkreis zur Regelung des Ausgangsstroms Iᵢₛₜ.

Der Regelkreis zur Regelung des Phasenwinkels weist einen Phasendetektor 8 auf, mittels dem in Abhängigkeit von einem Nulldurchgang des Ausgangsstroms Iᵢₛₜ ein lst-Phasenwinkel ermittelbar ist. In den Phasendetektor ist ein Mittel zur Detektierung eines Nulldurchgangs des Ausgangsstroms Iᵢₛₜ integriert. Der Phasendetektor hat einen Eingang, über den der Ist-Ausgangsstrom dem Phasendetektor zugeführt ist.

Zur Ermittlung des Phasenwinkels benötigt der Phasendetektor noch Informationen über den Nulldurchgang der Ausgangsspannung Uᵢₛₜ. Diese werden dem Phasendetektor 8 von dem Wechselrichter 203 zur Verfügung gestellt. Die Informationen umfassen die Totzeit Tₜ und den Zeitpunkt des Beginns des Einschaltimpulses des Einschaltsignals G. Aus diesen Informationen und dem Zeitpunkt des Nulldurchgangs des Ausgangsstroms Iᵢₛₜ kann der Phasendetektor 8 bei bekannter Frequenz, deren Wert ebenfalls vom Wechselrichter 203 zur Verfügung gestellt wird, den Ist-Phasenwinkel ermitteln.

Der Ist-Phasenwinkel bzw. ein den Ist-Phasenwinkel repräsentierendes Signal wird in einem Mittel 9 zur Bildung einer Regeldifferenz von dem vorgegebenen Soll-Phasenwinkel abgezogen, welches den gewünschten Arbeitspunkt vorgibt. Die so ermittelte Regeldifferenz wird einem ersten Regelmittel 10 zugeführt, das aus der Regeldifferenz eine Stellgröße ermittelt. Bei der Stellgröße handelt es sich um die Frequenz f, die an dem Wechselrichter 203 eingestellt wird, um die Regeldifferenz zu minimieren.

Der Regelkreis zur Regelung des Ausgangsstroms Iᵢₛₜ weist einen Stromsensor 4 auf, der die Ist-Stromstärke des Ausgangsstroms Iᵢₛₜ in einen die Ist-Stromstärke repräsentierendes Signal umwandelt. Dieses die Ist-Stromstärke repräsentierende Signal wird in einem Mittel 5 zur Bildung der Regeldifferenz e von der Führungsgröße, d.h. einem die Soll-Stromstärke repräsentierenden Signal abgezogen, um die Regeldifferenz e zu bilden.

Diese Regeldifferenz e wird dann zunächst weiter betrachtet. Diese Betrachtung erfolgt in einem Mittel 6 zur Bildung des Betrags der Regeldifferenz und zum Vergleich des Betrages der Regeldifferenz mit einem vorgegebenen Wert. Für die Betrachtung wird zunächst in dem Mittel 6 der Betrag der Regeldifferenz gebildet und dieser dann mit einem vorgegebenen Wert verglichen. Wenn der Betrag der Regeldifferenz größer als der vorgegebene Wert ist erfolgt eine Aktivierung eines zweiten Regelmittels 7 zur Regelung des Ausgangsstroms Iᵢₛₜ. Das zweite Regelmittel 7 zur Regelung des Ausgangsstroms kann ein Pl-Regler sein. Das zweite Regelmittel 7 erzeugt eine Stellgröße, mit der auf den Gleichrichter 201 eingewirkt wird, um die Zwischenkreisspannung U_{DC} zu verändern, von der der Ausgangsstrom Iᵢₛₜ des Wechselrichters 203 wie auch des gesamten Schwingkreiswechselrichters 20 abhängt.

## Patentansprüche

1. Schwingkreiswechselrichter (20)
- mit einem Gleichrichter,
- einem Gleichstromzwischenkreis (202) und
- einem Wechselrichter (203), der steuerbare Schalter umfasst und dessen Ausgang den Ausgang des Schwingkreiswechselrichters bildet und über den der Strom einer anschließbaren Last geführt wird,
- wobei der Schwingkreiswechselrichter (20) ein erstes Regelmittel aufweist (10), mit welchem der durch einen Phasenwinkel zwischen einem Ausgangsstrom (Iᵢₛₜ) und einer Spannung (Uᵢₛₜ) am Ausgang des Schwingkreiswechselrichters (20) festgelegte Arbeitspunkt (A_{P}) des Schwingkreiswechselrichters (20) regelbar ist, wozu das erste Regelmittel (10) als Stellgröße eine mittels des Wechselrichters (203) einzustellende Frequenz des Ausgangsstroms (Iᵢₛₜ) ermittelt,
- wobei der Schwingkreiswechselrichter (20) einen Phasendetektor (8) aufweist, mittels dem in Abhängigkeit von einem Nulldurchgang des Ausgangsstroms (Iᵢₛₜ) ein Ist-Phasenwinkel ermittelbar ist, und
- wobei der Schwingkreiswechselrichter ein Mittel zur Detektierung eines Nulldurchgangs des Ausgangsstroms (Iᵢₛₜ) aufweist,
**dadurch gekennzeichnet, dass** zur Ermittlung des Ist-Phasenwinkels die Differenz (Tᵢ-Tₜ)
- einer gemessenen Zeit (Tᵢ) zwischen einem Zeitpunkt eines Anlegens eines Einschaltimpulses an eine Steuerelektrode eines den Ausgangsstrom (Iᵢₛₜ) übernehmenden steuerbaren Schalters des Wechselrichters und dem Zeitpunkt des darauf folgenden Nulldurchgangs des Ausgangsstroms (Iᵢₛₜ) messbar und
- eine bekannte Totzeit (Tₜ) zwischen dem Zeitpunkt eines Anlegens eines Einschaltimpulses an einen Anschluss des Wechselrichters (203) zum Übernehmen des Ausgangsstroms durch einen steuerbaren Schalter des Wechselrichters (203) und einer darauf folgenden Umkehr der Spannung am Ausgang des Wechselrichters (203) ermittelbar ist.

2. Schwingkreiswechselrichter (20) nach Anspruch 1 , **dadurch gekennzeichnet, dass** dieser ein zweites Regelmittel (7) aufweist, mit welchem der Ausgangsstrom (Iᵢₛₜ) regelbar ist.

3. Schwingkreiswechselrichter (20) nach Anspruch 1 und 2, **dadurch gekennzeichnet, dass** dem zweiten Regelmittel (7) ein Mittel (5) zur Bildung einer Regeldifferenz (e) aus einem Signal (I*ₛₒₗₗ) für einen Soll-Ausgangsstrom und einem mittels eines Stromsensors gemessenen Signal (I*ᵢₛₜ) für einen Ist-Ausgangsstrom (Iᵢₛₜ) zugeordnet ist.

4. Schwingkreiswechselrichter (20) nach Anspruch 3, **dadurch gekennzeichnet, dass** der Schwingkreiswechselrichter (20) ein Mittel (6) zur Bildung des Betrags (|e|) der Regeldifferenz (e) und zum Vergleich des Betrages (|e|)der Regeldifferenz (e) mit einem vorgegebenen Wert aufweist.

5. Schwingkreiswechselrichter (20) nach Anspruch 4, **dadurch gekennzeichnet, dass** in Abhängigkeit eines Ergebnisses des Vergleiches entweder das erste Regelmittel (10) zum Regeln des Phasenwinkels aktivierbar oder deaktivierbar ist oder das erste Regelmittel (10) zum Regeln des Phasenwinkels und das zweite Regelmittel (7) zum Regeln des Ausgangsstroms (Iᵢₛₜ) aktivierbar oder deaktivierbar sind.

6. Verfahren zum Betreiben eines Schwingkreiswechselrichters (20) nach einem der Ansprüche 1 bis 5, **dadurch gekennzeichnet, dass** zum Initialisieren des Schwingkreiswechselrichters (20) zunächst die Resonanzfrequenz ermittelt wird.

7. Verfahren nach Anspruch 6, **dadurch gekennzeichnet, dass** zur Ermittlung der Resonanzfrequenz die Frequenz von einem Ausgangswert ausgehend herabgesetzt wird und der Ausgangsstrom (Iᵢₛₜ) gemessen wird, und dass die Frequenz als Resonanzfrequenz erfasst wird, bei der sich der größte Ausgangsstrom (Iᵢₛₜ) einstellt.

8. Verfahren nach Anspruch 7, **dadurch gekennzeichnet, dass** nach dem Ermitteln der Resonanzfrequenz die Regelung des Phasenwinkels mittels des ersten Regelmittels (10) der Phasenwinkel begonnen wird.

9. Verfahren nach Anspruch 7, **dadurch gekennzeichnet, dass** zum Regeln des Phasenwinkels die Differenz (Tᵢ-Tₜ)
- einer gemessenen Zeit (Tᵢ) zwischen einem Zeitpunkt eines Anlegens eines Einschaltimpulses an eine Steuerelektrode eines den Ausgangsstrom (Iᵢₛₜ) übernehmenden steuerbaren Schalters des Wechselrichters und dem Zeitpunkt des darauf folgenden Nulldurchgangs des Ausgangsstroms (Iᵢₛₜ) messbar und
- eine bekannte Totzeit (Tₜ) zwischen dem Zeitpunkt eines Anlegens eines Einschaltimpulses an eine Steuerelektrode eines den Ausgangsstrom übernehmenden steuerbaren Schalters des Wechselrichters und einer darauf folgenden Umkehr der Spannung (Uᵢₛₜ) am Ausgang des Wechselrichters (20)
ermittelt wird.

10. Verfahren nach Anspruch 7, **dadurch gekennzeichnet, dass** aus der Differenz (Tᵢ-Tₜ) der Ist-Phasenwinkel (ϕᵢₛₜ) ermittelt wird und eine Regeldifferenz aus einem Soll-Phasenwinkel (ϕₛₒₗₗ) und dem Ist-Phasenwinkel (ϕᵢₛₜ) gebildet wird.

11. Verfahren nach Anspruch 8, **dadurch gekennzeichnet, dass** mittels des ersten Regelmittels der Phasenwinkel (ϕᵢₛₜ) in Abhängigkeit der Regeldifferenz aus dem Soll-Phasenwinkel (ϕₛₒₗₗ) und dem Ist-Phasenwinkel (ϕᵢₛₜ) als Stellgröße für den Wechselrichter die Frequenz so verändert, dass sich am Ausgang des Wechselrichters (20) der Soll-Phasenwinkel (ϕₛₒₗₗ) einstellt.

12. Verfahren nach einem der Ansprüche 8 bis 1 1 , **dadurch gekennzeichnet, dass** nach einem Einregeln des Phasenwinkels (ϕᵢₛₜ) die Regelung des Ausgangsstroms (Iᵢₛₜ) mittels des zweiten Regelmittels (7) begonnen wird, falls ein Betrag (|e|) einer Regeldifferenz (e) zwischen dem Soll-Ausgangsstrom (Iₛₒₗₗ) und dem Ist-Ausgangsstrom (Iᵢₛₜ) größer als ein vorgegebener Wert ist.

13. Schaltungsanordnung (2) umfassend einen Schwingkreiswechselrichter (20) insbesondere nach einem der Ansprüche 1 bis 5, **dadurch gekennzeichnet, dass** diese am Ausgang des Schwingkreiswechselrichters (20) einen Transformator (22) mit einer Primärwicklung (221) und zwei gegensinnig gewickelten Sekundärwicklungen (223) mit gleicher Wicklungszahl aufweist, die mit einem Ende miteinander verbunden sind, so dass über den Sekundärwicklungen (223) einander entgegengesetzte Spannungen gleichen Betrags oder annähernd gleichen Betrags abgreifbar sind und die Spannung zwischen den nicht miteinander verbundenen Enden der Sekundärwicklungen null oder annähernd null ist.

14. Schaltungsanordnung (2) nach Anspruch 13, **dadurch gekennzeichnet, dass** die nicht miteinander verbundenen Enden der Sekundärwicklungen in Reihe zu je einem Ausgang (26) der Schaltungsanordnung (2) liegen.

15. Schaltungsanordnung nach Anspruch 14, **dadurch gekennzeichnet, dass** zwischen den nicht miteinander verbundenen Enden der Sekundärwicklungen und einem Anschluss der Ausgänge ein Kondensator und/oder ein Schalter angeordnet ist.
